# EUROPEAN PATENT SPECIFICATION

(11) **EP 3 189 084 B1**
(45) Date of publication and mention of the grant of the patent: **24.04.2019**
(21) Application number: 15754183.0
(22) Date of filing: 20.08.2015
(51) Int. Cl.: C08F 4/654, C08F 10/06

(54) **MAGNESIUM DICHLORIDE-ETHANOL ADDUCTS AND CATALYST COMPONENTS OBTAINED THEREFROM**
MAGNESIUM-DICHLORID-ETHANOLADDUKTE UND DARAUS GEWONNENE KATALYSATORKOMPONENTEN
PRODUITS D'ADDITION D'ÉTHANOL - DICHLORURE DE MAGNÉSIUM ET COMPOSANTS DE CATALYSEURS OBTENUS À PARTIR DE CEUX-CI

(30) Priority: 01.09.2014 EP 14182999
(43) Date of publication of application: 12.07.2017
(73) Proprietor: Basell Poliolefine Italia S.r.l., 20121 Milano (IT)
(72) Inventor: ARLETTI, Arrigo, I-44122 Ferrara (IT); CAIAZZO, Lucia, I-44122 Ferrara (IT); COLLINA, Gianni, I-44122 Ferrara (IT); EVANGELISTI, Daniele, I-44122 Ferrara (IT); FUSCO, Ofelia, I-44122 Ferrara (IT); GADDI, Benedetta, I-44122 Ferrara (IT)
(74) Representative: Giberti, Stefano
(86) International application number: PCT/EP2015/069161
(87) International publication number: WO 2016/034427

(56) References cited:
- EP-A1- 0 097 131
- WO-A1-2012/084735

## Description

### FIELD OF THE PRESENT DISCLOSURE

The present disclosure relates to the field of chemistry. In particular it relates to magnesium dichloride/ethanol adducts, which are characterized by particular chemical and physical properties. The disclosed adducts are particularly useful as precursors of catalyst components for the polymerization of olefins.

### BACKGROUND OF THE INVENTION

One of the most important family of propylene polymers is constituted by the so called heterophasic copolymers compositions made of a relatively high crystallinity propylene polymer fraction and a low crystallinity elastomeric component (for instance, a propylene-ethylene copolymer).

Although these compositions could be prepared by mechanical blending of the two main components, they are more commonly prepared via the sequential polymerization technique where the relatively high crystalline propylene polymer (sometimes called crystalline matrix) is prepared in a first polymerization reactor and then transferred to a successive polymerization reactor, where the low crystallinity elastomeric component is formed.

In this type of process the porosity of the relatively high crystallinity polymer matrix may affect the incorporation of the elastomeric fraction into the crystalline matrix.

As a general rule in fact, the higher is the porosity of the polymer matrix produced in the first step, the higher is the amount of elastomeric component that can be incorporated, within said matrix, in the second polymerization step.

On the other hand, if the porosity of the matrix is poor, the presence of an excessive amount of elastomeric polymer fraction on the particles surface considerably increases the tackiness of said particles which gives raise to agglomeration phenomena possibly causing reactor downsides such as reactor wall sheeting, plugging or even clogging.

A macroscopic measurement of the polymer porosity is given by the polymer bulk density. The bulk density or apparent density is the mass per unit of volume of a material, including voids inherent in the material of interest. In case of polymer particles of regular morphology, relatively low values of bulk density indicate a relatively high porosity of the polymer powder. Thus, at least for certain applications it would be desired to produce in the first polymerization step a propylene polymer endowed with both higher porosity (lower bulk density) and high crystallinity.

One option to produce crystalline polymers with a certain level of porosity is to polymerize propylene with a catalyst already having a certain level of porosity.

As disclosed in EP 395083, such catalyst can be obtained starting from adducts of formula MgCl₂•mF-tOH•nH₂O where m is between 1 and 6 and n is between 0.01 and 0.6 from which a certain amount of alcohol is removed thereby creating a porous precursor which is then converted into a catalyst component by reaction with a titanium compound containing at least one Ti-Cl bond.

As a drawback, the increase of the catalyst porosity may lead to a corresponding decrease of the catalyst performances in terms of polymerization activity.

The applicant has now found new MgCl₂•mEtOH•nH₂O adducts having specific chemical and physical properties useful as precursors to produce catalyst components able to generate polymers having lower bulk density without being penalized in polymerization activity.

### SUMMARY OF THE INVENTION

Accordingly, it is an object of the present disclosure to provide a solid catalyst precursor comprising magnesium chloride and ethanol in which:
- the total mercury porosity deriving from pores with radius up to 1000 nm is at least 0.15cm³/g;
- the average pore radius (APR) determined by mercury porosimeter ranges from 20.0 to 300.0 nm;
- the fraction of porosity deriving from pores of radius ranging from 100 to 1000 nm (LRP Large Radius Porosity) is at least 25% with respect to total porosity and
- the value of the formula (APR / wt%EtOH) *LRP is higher than 50.0 when APR is lower than 100 nm and the value of said formula is higher than 210 when APR is higher than 100 nm.

### DETAILED DESCRIPTION OF THE INVENTION

In a preferred embodiment of the present disclosure the total mercury porosity of the adduct ranges from 0.15 to 0.6 cm³/g, preferably from 0.18 to 0.5 and more preferably from 0.2 to 0.4 cm³/g.

The average pore radius (APR) preferably ranges from 50.0 to 250.0 and more preferably from 80 to 250.0 nm.

The LRP fraction is preferably at least 30% and more preferably at least 40% and in a particularly embodiment from 50% to 90% of the total porosity.

When the APR is lower than 100 nm the value of the formula (APR / wt%EtOH)*LRP is preferably higher than 60.0 and more preferably ranging from 70.0 to 100.0.

When the APR is higher than 100 nm the value of the formula (APR / wt%EtOH)*LRP is preferably higher than 220.0, more preferably higher than 230.0 and especially ranging from 250.0 to 500.0.

The weight percentage of ethanol with respect to the total weight of the precursor ranges from 10 to 60% preferably from 15 to 50%wt and especially from 15 to 40%.

The precursor having the above mentioned features can be obtained according to the following method. In a first step, MgCl₂ and ethanol are contacted, heating the system at the melting temperature of MgCl₂-alcohol adduct or above, and maintaining said conditions so as to obtain a completely melted adduct. In particular, the adduct is preferably kept at a temperature equal to or higher than its melting temperature, under stirring conditions, for a time period equal to, or greater than, 2 hours, preferably from 2 to 50 hours and more preferably from 5 to 40 hours.

Said molten adduct is then emulsified in a liquid medium which is immiscible with and chemically inert to it and finally quenched by contacting the adduct with an inert cooling liquid thereby obtaining the solidification of the adduct. It is also preferable, before recovering the solid particles, to leave them in the cooling liquid at a temperature ranging from -10 to 25°C for a time ranging from 1 to 24 hours. Due to the characteristics of the process the composition of the final adduct substantially corresponds to the feeding composition.

The emulsifying liquid medium can be any liquid immiscible with and chemically inert to the molten adduct. For example, aliphatic, aromatic or cycloaliphatic hydrocarbons can be used as well as silicone oils. Aliphatic hydrocarbons such as vaseline oil are particularly preferred.

The quenching liquid is preferably selected from hydrocarbons that are liquid at temperatures ranging from -30 to 30°C. Among them preferred are pentane, hexane, heptane or mixtures thereof.

In a variant of the above method, the particles of magnesium dichloride are dispersed in an inert liquid immiscible with and chemically inert to the molten adduct, the system is heated at temperature equal to or higher than the melting temperature of forming adduct and then the desired amount of ethanol/water mixture in vapor phase is added. The temperature is kept at values such that the adduct is completely melted. Once, obtained in molten form the process undergoes the same step described above.

The liquid in which the MgCl₂ is dispersed is of the same type of the emulsifying liquid disclosed above.

In another variant, the obtained molten adduct is solidified in discrete particles by using spray cooling technique in which the solution is sprayed by a nozzle in a cold atmosphere were immediate solidification occurs.

The mercury porosity of the so obtained solid adducts typically ranges from 0.05 to 0.12 cm³/g.

The mercury porosity can be increased by a dealcoholation step carried out according to known methodologies such as those described in EP-A-395083 in which dealcoholation is obtained by keeping the adduct particles in an open cycle fluidized bed created by the flowing of warm nitrogen which after removal of the alcohol from the adduct particles is directed out of the system. In this open cycle treatment, the dealcoholation is carried out at increasing temperature gradient until the particles have reached the desired alcohol content which is in any case at least 10% (molar amount) lower than the initial amount.

Once this value has been reached the particles are subject to a further treatment step characterized by the fact that it is isothermal and that the warm nitrogen flowing through the adduct particles is continuously recirculated in the reactor. Such a treatment can be carried out in fluidized bed apparatus where the bed of fluidized particle is confined at a certain height of the reactor, or it can be carried out in in a loop reactor apparatus comprising two interconnected zones one of which is a densified zone in which the particles flow downward in a densified form under the action of gravity and the other is a fast fluidization zone where the particles flow upwards under fast fluidization conditions. The state of fast fluidization is obtained when the velocity of the nitrogen fluidizing gas is higher than the transport velocity. In the densified zone, where the particles flows in a densified form under the action of gravity, high values of density of the solid are reached (density of the solid=kg of solid particles per m³ of reactor occupied), which approach the bulk density of the adduct; a positive gain in pressure can thus be obtained along the direction of flow, so that it becomes possible to reintroduce the solid particles into the fast fluidization zone without the help of special mechanical means. In this way, a "loop" circulation is set up, which is defined by the balance of pressures between the two zones of the reactor. Generally, the adduct particles and the alcohol containing nitrogen leaving the fast fluidization zone are conveyed to a solid/gas separation zone. The solid/gas separation can be effected by using conventional separation means such as, for example, a separator of the inertial type or centrifugal type, or a combination of the two.

From the separation zone the adduct particles enter the densified zone while the ethanol containing nitrogen leaving the separation zone is compressed, and transferred via a recycle line, equipped with compressing means, to the bottom part of the fast fluidization zone. Preferably, the said ethanol containing nitrogen can be transferred to a zone connecting the densified zone and the fast fluidization zone in order to facilitate the transfer of adduct particles from the densified to the fast fluidization zone. At the end of the treatment the adduct particles are discharged from the densified zone.

Independently from the use of a fluidized bed reactor or a gas loop described above the treatment is carried out in an isothermal state which can be reached according to known means such as injection of fluid at the proper temperature in the apparatus jacket. As the treatment is isothermal and the nitrogen is continuously recycled without separating the alcohol contained in it, an equilibrium condition is reached between the tension of vapor of the adduct particles and the ethanol containing nitrogen gas-phase which becomes saturated with alcohol. The temperature at which the treatment is carried out ranges from 50 to 150°C preferably from 70 to 120°C. Generally, temperatures in the upper part of the range are chosen for adducts with relatively low amount of alcohol and, on the contrary, temperature in the lower part of the range are more suitable for relatively high content of alcohol. This isothermal treatment stage may last from 1 to 60 hours, preferably from 2 to 40 hours, and more preferably from 3 to 30 hours and can be applied to any adduct batch coming from the open cycle dealcoholation step described above.

At the end of the isothermal treatment time the circulating nitrogen, and therefore the adduct particles, are cooled up to the room temperature so that the vapor tension of the adduct is lowered and the alcohol present in the gas phase gradually returns on the adduct particles. This makes it possible to collect the adduct particles having, at the end of the treatment, an amount of alcohol substantially unchanged with respect to that before the treatment and in any case subject to a loss inferior to 5%.

It has been observed that the isothermal treatment stage does not substantially alter the level of total porosity of the adduct particles, leading instead to an increase of the average pore radius (APR) and of the porosity fraction deriving from large radius pores (LRP).

The particles collected at the end of the treatment form, upon reaction with transition metal compounds, catalyst components suitable for the polymerization of olefins.

Among transition metal compounds particularly preferred are titanium compounds of formula Ti(OR)ₙX_{y-n} in which n is comprised between 0 and y; y is the valence of titanium; X is chlorine and R is an hydrocarbon radical, preferably alkyl, radical having 1-10 carbon atoms or a COR group. Among them, particularly preferred are titanium compounds having at least one Ti-Cl bond such as titanium tetrachlorides or chloroalcoholates. Preferred specific titanium compounds are TiCl₃, TiCl₄, Ti(OBu)₄, Ti(OBu)Cl₃, Ti(OBu)₂Cl₂, Ti(OBu)₃Cl. Preferably, the reaction is carried out by suspending the adduct in cold TiCl₄ (generally 0°C); then the so obtained mixture is heated up to 80-130°C and kept at this temperature for 0.5-2 hours. After that, the excess of TiCl₄ is removed and the solid component is recovered. The treatment with TiCl₄ can be carried out one or more times.

The reaction between transition metal compound and the adduct can also be carried out in the presence of an electron donor compound (internal donor) in particular when the preparation of a stereospecific catalyst for the polymerization of olefins is to be prepared. Said electron donor compound can be selected from esters, ethers, amines, silanes and ketones. In particular, the alkyl and aryl esters of mono or polycarboxylic acids such as for example esters of benzoic, phthalic, malonic and succinic acid are preferred. Specific examples of such esters are n-butylphthalate, di-isobutylphthalate, din-octylphthalate, diethyl 2,2-diisopropylsuccinate, diethyl 2,2-dicyclohexyl-succinate, ethyl-benzoate and p-ethoxy ethyl-benzoate. Moreover, can be advantageously used also the 1,3 diethers of the formula: 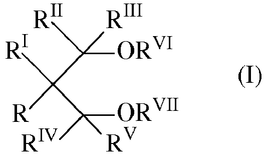 wherein R, R^{I}, R^{II}, R^{III}, R^{IV} and R^{V} equal or different to each other, are hydrogen or hydrocarbon radicals having from 1 to 18 carbon atoms, and R^{VI} and R ^{VII}, equal or different from each other, have the same meaning of R-R^{V} except that they cannot be hydrogen; one or more of the R-R^{VII} groups can be linked to form a cycle. The 1,3-diethers in which R^{VI} and R^{VII} are selected from C₁-C₄ alkyl radicals are particularly preferred. Also usable are the diolesters donors disclosed in U.S. Patent No. 7,388,061.

The electron donor compound is generally present in molar ratio with respect to the magnesium comprised between 1:4 and 1:20.

In a particular embodiment, the particles of the solid catalyst components replicate those of the solid adducts illustrated above, thus showing a substantially spherical morphology and an average diameter comprised between 5 and 150µm.

Surprisingly, the catalyst components comprising the reaction product of a transition metal compound with the precursor of the present disclosure, are capable to produce polymers having higher porosity (lower bulk density), with respect to the catalyst components prepared from the precursor not having the combination of described features notwithstanding the similar level of total porosity.

The catalyst components of the present disclosure form catalysts for the polymerization of alpha-olefins CH₂=CHR, wherein R is hydrogen or a hydrocarbon radical having 1-12 carbon atoms, by reaction with Al-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as AlEt₂Cl and Al₂Et₃Cl₃ optionally in mixture with said trialkyl aluminum compounds..

The Al/Ti ratio is higher than 1 and is generally comprised between 20 and 2000.

In the case of the stereoregular polymerization of α-olefins such as for example propylene and 1-butene, an electron donor compound (external donor) which can be the same or different from the compound used as internal donor can be used in the preparation of the catalysts disclosed above. In case the internal donor is an ester of a polycarboxylic acid, in particular a phthalate, the external donor is preferably selected from the silicon compounds containing at least a Si-OR link, having the formula Rₐ¹R_{b}²Si(OR³)_{c}, where a and b are integer from 0 to 2, c is an integer from 1 to 3 and the sum (a+b+c) is 4; R¹, R², and R³, are alkyl, cycloalkyl or aryl radicals with 1-18 carbon atoms. Particularly preferred are the silicon compounds in which a is 1, b is 1, c is 2, at least one of R¹ and R² is selected from branched alkyl, cycloalkyl or aryl groups with 3-10 carbon atoms and R³ is a C₁-C₁₀ alkyl group, in particular methyl. Examples of such preferred silicon compounds are methylcyclohexyldimethoxysilane, diphenyldimethoxysilane, methyl-t-butyldimethoxysilane, dicyclopentyldimethoxysilane. Moreover, are also preferred the silicon compounds in which a is 0, c is 3, R² is a branched alkyl or cycloalkyl group and R³ is methyl. Examples of such preferred silicon compounds are cyclohexyltrimethoxysilane, t-butyltrimethoxysilane and thexyltrimethoxysilane.

Also the 1,3 diethers having the previously described formula can be used as external donor. However, in the case 1,3-diethers are used as internal donors, the use of an external donor can be avoided, as the stereospecificity of the catalyst is already sufficiently high.

As previously indicated the components of the present disclosure and catalysts obtained therefrom find applications in the processes for the (co)polymerization of olefins of formula CH₂=CHR in which R is hydrogen or a hydrocarbon radical having 1-12 carbon atoms.

The catalysts of the present disclosure can be used in any of the olefin polymerization processes known in the art. They can be used for example in slurry polymerization using as diluent an inert hydrocarbon solvent or bulk polymerization using the liquid monomer (for example propylene) as a reaction medium. Moreover, they can also be used in the polymerization process carried out in gas-phase operating in one or more fluidized or mechanically agitated bed reactors.

The polymerization is generally carried out at temperature of from 20 to 120°C, preferably of from 40 to 80°C. When the polymerization is carried out in gas-phase the operating pressure is generally between 0.1 and 10 MPa, preferably between 1 and 5 MPa. In the bulk polymerization the operating pressure is generally between 1 and 6 MPa preferably between 1.5 and 4 MPa.

The catalysts of the present disclosure are very useful for preparing a broad range of polyolefin products. Specific examples of the olefinic polymers which can be prepared are: high density ethylene polymers (HDPE, having a density higher than 0.940 g/cc), comprising ethylene homopolymers and copolymers of ethylene with alpha-olefins having 3-12 carbon atoms; linear low density polyethylenes (LLDPE, having a density lower than 0.940 g/cc) and very low density and ultralow density (VLDPE and ULDPE, having a density lower than 0.920 g/cc, to 0.880 g/cc) consisting of copolymers of ethylene with one or more alpha-olefins having from 3 to 12 carbon atoms, having a mole content of units derived from the ethylene higher than 80%; isotactic polypropylenes and crystalline copolymers of propylene and ethylene and/or other alpha-olefins having a content of units derived from propylene higher than 85% by weight; copolymers of propylene and 1-butene having a content of units derived from 1-butene comprised between 1 and 40% by weight; heterophasic copolymers comprising a crystalline polypropylene matrix and an amorphous phase comprising copolymers of propylene with ethylene and or other alpha-olefins. The following examples are given to illustrate the present disclosure.

### CHARACTERIZATION

Porosity and surface area with nitrogen: are determined according to the B.E.T. method (apparatus used SORPTOMATIC 1900 by Carlo Erba).

### Porosity and surface area with mercury:

The measure is carried out using a "Pascal 240" series porosimeter by Carlo Erba.

The porosity is determined by intrusion of mercury under pressure. For this determination use is made of a calibrated dilatometer (capillary diameter 3 mm) CD3P (by Carlo Erba) connected to a reservoir of mercury and to a high-vacuum pump. A weighed amount of sample is placed in the dilatometer. The apparatus is then placed under high vacuum (<0.1 mm Hg) and is maintained in these conditions for 20 minutes. The dilatometer is then connected to the mercury reservoir and the mercury is allowed to flow slowly into it until it reaches the level marked on the dilatometer at a height of 10 cm. The valve that connects the dilatometer to the vacuum pump is closed and then the mercury pressure is gradually increased with nitrogen up to 140 kg/cm². Under the effect of the pressure, the mercury enters the pores and the level goes down according to the porosity of the material.

The porosity (cm³/g) (for supports and catalysts only deriving from pores up to 1000 nm and for polymer up to 10000 nm) and the pore distribution curve, are directly calculated from the integral pore distribution curve, which is function of the volume reduction of the mercury and applied pressure values (all these data are provided and elaborated by the porosimeter associated computer which is equipped with a dedicated Pascal software supplied by C. Erba.

The average pore size is determined as the weighted average by the pore distribution curve and it calculated summing up all the values obtained by multiplying the relative volume (%) of each pore fraction in the range 0-1000 nm of the curve by the average pore radius of the said fraction and dividing by 100 the so obtained sum.

### EXAMPLES

### General procedure for the preparation of the catalyst component

Into a 11 steel reactor provided with stirrer, 500 cm³ of TiCl₄ at 0°C were introduced; at room temperature and whilst stirring 30 g of the adduct were introduced together with an amount of diisobutylphthalate as internal donor so as to give a Mg / donor molar ratio of 8. The whole was heated to 100°C over 90 minutes and these conditions were maintained over 60 minutes. The stirring was stopped and after 15 minutes the liquid phase was separated from the sedimented solid maintaining the temperature at 100°C. A further treatment of the solid was carried out adding 500 cm³ of TiCl₄ and heating the mixture at 110°C over 10 min. and maintaining said conditions for 30 min under stirring conditions (500 rpm). The stirring was then discontinued and after 30 minutes the liquid phase was separated from the sedimented solid maintaining the temperature at 110°C. Two further treatment of the solid was carried out adding 500 cm³ of TiCl₄ and heating the mixture at 120°C over 10 min. and maintaining said conditions for 30 min under stirring conditions (500 rpm). The stirring was then discontinued and after 30 minutes the liquid phase was separated from the sedimented solid maintaining the temperature at 120°C. Thereafter, 3 washings with 500 cm³ of anhydrous hexane at 60°C and 3 washings with 500 cm³ of anhydrous hexane at room temperature were carried out. The solid catalyst component obtained was then dried under vacuum in nitrogen environment at a temperature ranging from 40-45°C.

### General procedure for the propylene polymerization test.

A 4 litre steel autoclave equipped with a stirrer, pressure gauge, thermometer, catalyst feeding system, monomer feeding lines and thermostatting jacket, was used. The reactor was charged with 0.01 gr. of solid catalyst component 0.76 g of TEAL, 0.06g of cyclohexylmethyldimethoxysilane, 3.2 1 of propylene, and 2.0 1 of hydrogen. The system was heated to 70°C over 10 min. under stirring, and maintained under these conditions for 120 min. At the end of the polymerization, the polymer was recovered by removing any unreacted monomers and was dried under vacuum.

Differently from the general procedure for example 1 and comparative example 1 were used a different amount of catalyst (0.025 gr.), donor (0.3g of cyclohexylmethyldimethoxysilane), and 1.25 1 of hydrogen.

Also, for example 2-3 and comparative example 2 were used with respect to the general procedure, a different amount of donor (0.315g of cyclohexylmethyldimethoxysilane), and hydrogen (1.25 1).

### Example 1 and comparative example 1

In a vessel reactor equipped with a IKA RE 166 stirrer containing 1030 g of anhydrous EtOH at -8°C were introduced under stirring 550 g of MgCl₂ and 16 g of water. Once the addition of MgCl₂ was completed, the temperature was raised up to 108°C and kept at this value for 20 hrs. After that, while keeping the temperature at 108°C, the melt was fed by volumetric pump set to 62 ml/min together with OB55 oil fed by volumetric pump set to 225 ml/min, to an emulsification unit operating at 2800 rpm and producing an emulsion of the melt into the oil. While melt and oil were fed in continuous, the mixture at about 108°C was continuously discharged into a vessel containing 22 liters of cold hexane which was kept under stirring and cooled so that the final temperature did not exceed 12°C. After 24 hours, the solid particles of the adduct recovered were then washed with hexane and dried at 40°C under vacuum. The compositional analysis showed that the particles contained 61.5 % by weight of EtOH, 1.45% of water the remaining being MgCl₂.

The adduct was then thermally dealcoholated under increasing temperature nitrogen flow until the content of EtOH reached a chemical composition of 36.2% EtOH 1.9% H₂O, a porosity deriving from pores up to 1000 nm of 0.595 cm³/g and an average pore radius of 183.2 nm. The fraction of porosity deriving from pores of radius ranging from 100 to 1000 nm (LRP) was 36.3% with respect to total porosity.

The partially dealcoholated adduct particles were fed in to the cavitated zone of a Loedige type apparatus placed after the fast fluidization zone and before the densified zone of a gas-phase circulating loop reactor. In the fast fluidization zone the particles are transported upwards by the high velocity of the flowing nitrogen and in the densified zone the particles flow downward under the action of gravity. The circulating nitrogen was maintained under stationary isothermal state at 90°C for 20 hrs, by feeding hot water in the reactor jacket. After that time, the adduct particles were cooled at room temperature by feeding room temperature water in the jacket and then discharged. The discharged product had a chemical composition of 35.8% EtOH and 2% H₂O. Its total porosity was 0.589 cm³/g, the LRP raised to 74.8% and the average pore size raised to 204.4 nm. Then, samples of said dealcoholated adducts before (comparative) and after the said stationery isothermal treatment were used to prepare, according to the general procedure, the catalyst component which was then used in a polymerization test carried out according to the procedure described above. The results are reported in Table 2.

### Example 2 and Comparative 2

An initial amount of MgCl₂·2.8C₂H₅OH adduct was prepared according to the methodology described in Example 2 of PCT Publication No. WO98/44009, but operating on larger scale.

The adduct was then thermally dealcoholated under increasing temperature nitrogen flow until the content of EtOH reached a chemical composition of 43.3 wt. % EtOH, with a porosity deriving from pores up to 1000 nm of 0.279 cm³/g and an average pore radius of 156 nm. The partially dealcoholated adduct was then treated at 90°C for 3 hrs, under stationary isothermal state in a nitrogen gas circulating loop as described in Example 1. The discharged product had a chemical composition of 42% EtOH. Its total porosity was 0.30 cm³/g, the fraction of porosity deriving from pores with radius ranging from 100 to 1000 nm (LRP) was 80.2 % with respect to total porosity and the average pore radius of raised to 224.4 nm. Then, a sample of said isothermally treated adduct and a sample of the adduct not subject to isothermal treatment were used to prepare, according to the general procedure, the catalyst components which were then used in a polymerization test carried out according to the procedure described above. The results are reported in Table 1.

### Example 3

An initial amount of MgCl₂·2.8C₂H₅OH adduct was prepared according to the methodology described in Example 2 of PCT Publication No. WO98/44009, but operating on larger scale.

The adduct was then thermally dealcoholated under increasing temperature nitrogen flow until the content of EtOH reached a chemical composition of 42.3% EtOH, with a porosity deriving from pores up to 1000 nm of 0.230 cm³/g and an average pore radius of 137.5 nm. The fraction of porosity deriving from pores with radius ranging from 100 to 1000 nm (LRP) was 51.7% with respect to total porosity.

The partially dealcoholated adduct was then treated at 90°C for 6 hrs, under stationary isothermal state in a nitrogen gas circulating loop as described in Example 1. The discharged product had a chemical composition of 42.3% EtOH. Its total porosity was 0.23 cm³/g, the fraction of porosity deriving from pores with radius ranging from 100 to 1000 nm (LRP) increased to 77.6% with respect to total porosity and the average pore radius of raised to 204.2nm.

Then, a sample of said isothermally treated adduct was used to prepare, according to the general procedure, the catalyst component which was then used in a polymerization test carried out according to the procedure described above. The results are reported in Table 1.

### Example 4-5 and comparative 3

An initial amount of MgCl2·C2H5OH adduct containing 55.6%wt of alcohol was prepared according to the methodology described in Example 2 of PCT Publication No. WO98/44009, but operating on larger scale.

The adduct was then thermally dealcoholated under increasing temperature nitrogen flow until the content of EtOH reached a chemical composition of 43.0% EtOH, with a porosity deriving from pores up to 1000 nm of 0.232 cm³/g and an average pore radius of 79.1 nm. The fraction of porosity deriving from pores with radius ranging from 100 to 1000 nm (LRP) was 24.0% with respect to total porosity.

The partially dealcoholated adduct was then treated at 90°C for 8 hrs, under stationary isothermal state in a nitrogen gas circulating loop as described in Example 1. The discharged product (A1) contained 42.7% EtOH. Its total porosity was 0.196 cm³/g, the fraction of porosity deriving from pores with radius ranging from 100 to 1000 nm (LRP) increased to 66.6% with respect to total porosity and the average pore radius of raised to 151.5nm. Another amount of partially dealcoholated adduct was then treated at 78°C for 8 hrs, under stationary isothermal state in a nitrogen gas circulating loop as described in Example 1. The discharged product (A2) contained 43.0% EtOH. Its total porosity was 0.22 cm³/g, the fraction of porosity deriving from pores with radius ranging from 100 to 1000 nm (LRP) increased to 35.8% with respect to total porosity and the average pore radius of raised to 95.9 nm.

Then, samples of said dealcoholated adducts before (comparative) and after the said stationery isothermal treatment were used to prepare, according to the general procedure, the catalyst component which was then used in a polymerization test carried out according to the procedure described above. The results are reported in Table 1.

### Example 6-7 and comparative 4

An initial amount of MgCl₂·C₂H₅OH adduct containing 55.6%wt of alcohol was prepared according to the methodology described in Example 2 of WO98/44009, but operating on larger scale.

The adduct was then thermally dealcoholated under increasing temperature nitrogen flow until the content of EtOH reached a chemical composition of 37.4% EtOH, with a porosity deriving from pores up to 1µm of 0.338 cm³/g and an average pore radius of 129.6 nm. The fraction of porosity deriving from pores with radius ranging from 100 to 1000 nm (LRP) was 42.6% with respect to total porosity.

A sample of the partially dealcoholated adduct was then treated at 100°C for 8 hrs, under stationary isothermal state in a nitrogen gas circulating loop as described in Example 1. The discharged product (B1) contained 36.2% EtOH. Its total porosity was 0.338 cm³/g, the fraction of porosity deriving from pores with radius ranging from 100 to 1000 nm (LRP) increased to 52.5% with respect to total porosity and the average pore radius of raised to 151.9nm.

Another amount of partially dealcoholated adduct was then treated at 110°C for 8 hrs, under stationary isothermal state in a nitrogen gas circulating loop as described in Example 1. The discharged product (B2) contained 36.6% EtOH. Its total porosity was 0.355 cm³/g, the fraction of porosity deriving from pores with radius ranging from 100 to 1000 nm (LRP) increased to 63.48% with respect to total porosity and the average pore radius of raised to 154.2 nm.

Then, samples of said dealcoholated adducts before (comparative) and after the said stationery isothermal treatment were used to prepare, according to the general procedure, the catalyst component which was then used in a polymerization test carried out according to the procedure described above. The results are reported in Table 1.

**TABLE 1**

| **Example** | **Activity Kg/gcat** | **I.I.** | **Polymer Porosity (cm³/g)** | **Polymer bulk Density** |
|---|---|---|---|---|
| 1 | 10.7 | 96.1 | | 0.34 |
| Comp.1 | 15.3 | 96.3 | | 0.37 |
| 2 | 16 | 97.4 | | 0.33 |
| Comp.2 | 20 | 97.5 | | 0.41 |
| 3 | 20.1 | 97.1 | | 0.38 |
| 4 | 30.3 | 98.2 | 0.25 | 0.41 |
| 5 | 33.6 | 97.8 | 0.23 | 0.40 |
| Comp 3 | 32.4 | 97.9 | 0.17 | 0.46 |
| 6 | 19.3 | 96.9 | 0.51 | 0.33 |
| 7 | 17.7 | 96.2 | 0.62 | 0.33 |
| Comp. 4 | 14 | 96.1 | 0.47 | 0.40 |

## Claims

1. A solid catalyst precursor comprising magnesium chloride and ethanol in which:
(i) the total mercury porosity deriving from pores with radius up to 1000 nm is at least 0.15 cm³/g;
(ii) the average pore radius (APR) determined by mercury porosimeter ranges from 20.0 to 300.0 nm;
(iii) the fraction of porosity deriving from pores of radius ranging from 100 to 1000 nm (LRP) is at least 25% with respect to total porosity and
(iv) the value of the formula (APR / %wtEtOH) *LRP is higher than 50.0 when APR is lower than 100 nm and the value of said formula is higher than 210.0 when APR is higher than 100 nm.

2. The solid catalyst precursor of claim 1 in which total mercury porosity ranges from 0.15 to 0.6 cm³/g.

3. The solid catalyst precursor according to claim 1 in which the average pore radius (APR) ranges from 50.0 to 250.0 nm.

4. The solid catalyst precursor according to claim 1 in which the LRP fraction is preferably at least 30% of the total porosity.

5. The solid catalyst precursor according to claim 1 in which when the APR is lower than 100 nm, the value of the formula (APR / %wtEtOH) *LRP is higher than 60.0.

6. The solid catalyst precursor according to claims 1 and/or 2 in which when the APR is higher than 100 nm, the value of the formula (APR/%wtEtOH) *LRP is higher than 220.0.

7. The solid catalyst precursor of claim 1 in which the weight percentage of ethanol with respect to the total amount of precursor ranges from 15 to 50%wt.

8. A process for the preparation of the solid precursor of claim 1 comprising:
(a) forming a MgCl₂•mEtOH•nH₂O adduct where m is between 1 and 6 and n is between 0.01 and 0.6 by contacting MgCl₂ and ethanol at the melting temperature of said adduct or above, and maintaining said conditions so as to obtain a completely melted adduct;
(b) solidifying it in the form of discrete particles,
(c) subjecting the particles coming from (b) to a dealcoholation step removing at least 10% (molar amount) of the initial alcohol content and
(d) subjecting the particles coming from (c) to an isothermal treatment stage at a temperature ranging from 50 to 150°C for a time ranging from 1 to 60 hours carried out by continuously recirculating a nitrogen flow through the said particles.

9. Solid catalyst components for the polymerization of olefins obtained by reacting the solid precursors according to anyone of the preceding claims 1-7 with one or more transition metal compounds.

10. The solid catalyst components according to claim 9 in which the transition metal compound is selected from titanium compounds of formula Ti(OR)ₙX_{y-n} in which n is comprised between 0 and y; y is the valence of titanium; X is chlorine and R is an hydrocarbon radical.

11. The solid catalyst components according to claim 9 in which the reaction between the transition metal compound and the adduct is carried out in the presence of an electron donor compound selected from esters, ethers, amines, silanes and ketones.

12. Catalyst for the polymerization of olefins comprising the product of the reaction between a catalyst component according to anyone of the claims 9 to 11, and an organoaluminum compound.

13. The catalyst for the polymerization of olefins according to claim 12 further comprising an external donor.

14. The catalyst for the polymerization of olefins according to claim 13 in which the external donor is selected from the silicon compounds containing at least a Si-OR link, having the formula Rₐ1R_{b}²Si(OR³)_{c}, where a and b are integer from 0 to 2, c is an integer from 1 to 3 and the sum (a+b+c) is 4; R¹, R², and R³ are alkyl, cycloalkyl or aryl radicals with 1-18 carbon atoms.

15. Process for the polymerization of olefins of formula CH₂=CHR, in which R is hydrogen or a hydrocarbon radical having 1-12 carbon atoms, carried out in the presence of a catalyst according to any one of the claims 12-14.

## Patentansprüche

1. Fester Katalysatorvorläufer, der Magnesiumchlorid und Ethanol umfasst, worin:
(i) die gesamte Quecksilberporosität, die von Poren mit einem Radius bis zu 1000 nm abgeleitet ist, mindestens 0,15 cm³/g beträgt;
(ii) der durchschnittliche Porenradius (APR), der mittels Quecksilber-Porosimeter bestimmt wurde, im Bereich von 20,0 bis 300,0 nm liegt;
(iii) die Fraktion der Porosität, die von Poren mit einem Radius im Bereich von 100 bis 1000 nm (LRP) abgeleitet ist, in Bezug auf die Gesamtporosität mindestens 25 % beträgt, und
(iv) der Wert der Formel (APR / Gew.% EtOH) *LRP größer als 50,0 ist, wenn APR kleiner als 100 nm ist, und der Wert der Formel größer als 210,0 ist, wenn APR größer als 100 nm ist.

2. Fester Katalysatorvorläufer nach Anspruch 1, wobei die gesamte Quecksilber-Porosität im Bereich von 0,15 bis 0,6 cm³/g liegt.

3. Fester Katalysatorvorläufer nach Anspruch 1, wobei der durchschnittliche Porenradius (APR) im Bereich von 50,0 bis 250,0 nm liegt.

4. Fester Katalysatorvorläufer nach Anspruch 1, wobei die LRP-Fraktion vorzugsweise mindestens 30 % der gesamten Porosität beträgt.

5. Fester Katalysatorvorläufer nach Anspruch 1, wobei der Wert der Formel (APR / Gew.% EtOH)*LPR größer als 60,0 ist, wenn der APR kleiner als 100 nm ist.

6. Fester Katalysatorvorläufer nach Anspruch 1 und/oder 2, wobei der Wert der Formel (APR / Gew.% EtOH)*LPR größer als 220,0 ist, wenn der APR größer als 100 nm ist.

7. Fester Katalysatorvorläufer nach Anspruch 1, wobei der Gewichtsprozentsatz von Ethanol in Bezug auf die Gesamtmenge des Vorläufers im Bereich von 15 bis 50 Gew.% liegt.

8. Verfahren zur Herstellung des festen Vorläufers nach Anspruch 1, umfassend:
(a) Bilden eines Addukts MgCl₂•m EtOH•n H₂O, wobei m zwischen 1 und 6 liegt, und n zwischen 0,01 und 0,6 liegt, indem MgCl₂ und Ethanol bei der Schmelztemperatur des Addukts oder darüber in Kontakt gebracht werden, und
die Bedingungen so gehalten werden, dass ein vollständig geschmolzenes Addukt erhalten wird;
(b) es in Form von diskreten Partikeln verfestigt wird,
(c) die aus (b) kommenden Partikel einem Dealkoholierungsschritt unterzogen werden, wodurch mindestens 10 % (molare Menge) des anfänglichen Alkoholgehalts entfernt werden, und
(d) die aus (c) kommenden Partikel einer isothermen Behandlungsstufe bei einer Temperatur im Bereich von 50 bis 150 °C für eine Zeit im Bereich von 1 bis 60 Stunden unterzogen werden, die durchgeführt wird, indem kontinuierlich ein Stickstofffluss durch die Partikel hindurch rezirkuliert wird.

9. Feste Katalysatorkomponenten für die Polymerisation von Olefinen, die durch Umsetzen der festen Vorläufer gemäß einem der vorhergehenden Ansprüche 1 bis 7 mit einer oder mehreren Übergangsmetallverbindungen erhalten werden.

10. Feste Katalysatorkomponenten nach Anspruch 9, wobei das Übergangsmetall ausgewählt ist aus Titanverbindungen mit der Formel Ti(OR)ₙX_{y-n}, in der n zwischen 0 und y liegt; y die Wertigkeit von Titan ist; X Chlor ist und R ein Kohlenwasserstoffrest ist.

11. Feste Katalysatorkomponente nach Anspruch 9, wobei die Reaktion zwischen der Übergangsmetallverbindung und dem Addukt in Gegenwart einer Elektronendonorverbindung durchgeführt wird, die ausgewählt ist aus Estern, Ethern, Aminen, Silanen und Ketonen.

12. Katalysator zur Polymerisation von Olefinen, umfassend das Reaktionsprodukt zwischen einer Katalysatorkomponente gemäß einem der Ansprüche 9 bis 11 und einer Organoaluminiumverbindung.

13. Katalysator zur Polymerisation von Olefinen nach Anspruch 12, der ferner einen externen Donor umfasst.

14. Katalysator zur Polymerisation von Olefinen nach Anspruch 13, wobei der externe Donor ausgewählt ist aus den Siliciumverbindungen, die mindestens eine Verknüpfung Si-OR enthalten, mit der Formel R¹ₐR²_{b}Si(OR³)_{c}, wobei a und b ganze Zahlen von 0 bis 2 sind, c eine ganze Zahl von 1 bis 3 ist und die Summe (a+b+c) 4 ist; R¹, R² und R³ Alkyl-, Cycloalkyl- oder Arylreste mit 1 bis 18 Kohlenstoffatomen sind.

15. Verfahren zur Polymerisation von Olefinen CH₂=CHR, wobei R Wasserstoff oder ein Kohlenwasserstoffrest mit 1 bis 12 Kohlenstoffatomen ist, das in Gegenwart eines Katalysators gemäß einem der Ansprüche 12 bis 14 durchgeführt wird.

## Revendications

1. Précurseur de catalyseur solide comprenant du chlorure de magnésium et de l'éthanol dans lequel :
(i) la porosité totale du mercure dérivant des pores ayant un rayon allant jusqu'à 1000 nm est d'au moins 0,15 cm³/g ;
(ii) le rayon de pore moyen (APR) déterminé par porosimétrie au mercure est situé dans une plage allant de 20,0 à 300,0 nm ;
(iii) la fraction de porosité dérivant de pores ayant un rayon dans une plage allant de 100 à 1000 nm (LRP) représente au moins 25 % de la porosité totale et
(iv) la valeur de la formule (APR / % en poids EtOH) *LRP est supérieure à 50,0 lorsque APR est inférieur à 100 nm et la valeur de ladite formule est supérieure à 210,0 lorsque APR est supérieur à 100 nm.

2. Précurseur de catalyseur solide selon la revendication 1 dans lequel la porosité totale du mercure est située dans une plage allant de 0,15 à 0,6 cm³/g.

3. Précurseur de catalyseur solide selon la revendication 1 dans lequel le rayon de pore moyen (APR) est situé dans une plage allant de 50,0 à 250,0 nm.

4. Précurseur de catalyseur solide selon la revendication 1 dans lequel la fraction LRP équivaut, de préférence, à au moins 30 % de la porosité totale.

5. Précurseur de catalyseur solide selon la revendication 1 dans lequel lorsque l'APR est inférieur à 100 nm, la valeur de la formule (APR / % en poids EtOH) * LRP est supérieure à 60,0.

6. Précurseur de catalyseur solide selon les revendications 1 et/ou 2 dans lequel lorsque l'APR est supérieur à 100 nm, la valeur de la formule (APR/% en poids EtOH) *LRP est supérieure à 220,0.

7. Précurseur de catalyseur solide selon la revendication 1 dans lequel le pourcentage en poids d'éthanol par rapport à la quantité totale de précurseur est situé dans une plage allant de 15 à 50 % en poids.

8. Procédé de préparation du précurseur solide selon la revendication 1 comprenant les étapes qui consistent à :
(a) former un produit d'addition MgCl₂•mEtOH•nH₂O où m est compris entre 1 et 6 et n est compris entre 0,01 à 0,6 en mettant en contact le MgCl₂ et l'éthanol à la température de fusion dudit produit d'addition ou à une température supérieure, et maintenir lesdites conditions de manière à obtenir un produit d'addition complètement fondu ;
(b) le solidifier sous la forme de particules discrètes,
(c) soumettre les particules provenant de (b) à une étape de désalcoolisation éliminant au moins 10 % (quantité molaire) de la teneur initiale en alcool et
(d) soumettre les particules provenant de (c) à une étape de traitement isotherme à une température dans une plage allant de 50 à 150 °C pendant une durée comprise entre 1 et 60 heures, réalisée par recirculation en continu d'un flux d'azote à travers lesdites particules.

9. Composants de catalyseur solide pour la polymérisation d'oléfines obtenus par réaction des précurseurs solides selon l'une quelconque des revendications précédentes 1 à 7 avec un ou plusieurs composés de métal de transition.

10. Composants de catalyseur solide selon la revendication 9 dans lesquels le composé de métal de transition est choisi parmi les composés de titane de formule Ti(OR)ₙX_{y-n} dans laquelle n est compris entre 0 et y ; y est la valence du titane ; X est le chlore et R est un radical hydrocarboné.

11. Composants de catalyseur solide selon la revendication 9 dans lesquels la réaction entre le composé de métal de transition et le produit d'addition est réalisée en présence d'un composé donneur d'électrons choisi parmi les esters, les éthers, les amines, les silanes et les cétones.

12. Catalyseur pour la polymérisation d'oléfines comprenant le produit de la réaction entre un composant de catalyseur selon l'une quelconque des revendications 9 à 11, et un composé organoaluminium.

13. Catalyseur pour la polymérisation d'oléfines selon la revendication 12 comprenant, en outre, un donneur externe.

14. Catalyseur pour la polymérisation d'oléfines selon la revendication 13 dans laquelle le donneur externe est choisi parmi les composés de silicium contenant au moins une liaison Si-OR, ayant la formule Ra¹Rb²Si(OR³)_{c}, où a et b sont un nombre entier de 0 à 2, c est un nombre entier de 1 à 3 et la somme (a+b+c) est 4 ; R¹, R², et R³ sont des radicaux alkyle, cycloalkyle ou aryle ayant 1 à 18 atomes de carbone.

15. Procédé pour la polymérisation d'oléfines de formule CH₂=CHR, dans lesquelles R' est hydrogène ou un radical hydrocarboné ayant 1 à 12 atomes de carbone, réalisé en présence d'un système catalyseur selon l'une quelconque des revendications 12 à 14.
